(19) Europäisches Patentamt / European Patent Office / Office européen des brevets

(11) **EP 4 413 391 B1**

(12) **EUROPEAN PATENT SPECIFICATION**

(45) Date of publication and mention
of the grant of the patent:
**01.07.2026 Bulletin 2026/27**

(21) Application number: **22799918.2**

(22) Date of filing: **04.10.2022**

(51) International Patent Classification (IPC):
*G01S 7/40* (2006.01)    *G01S 13/931* (2020.01)
*G01S 13/58* (2006.01)    *G01S 13/44* (2006.01)

(52) Cooperative Patent Classification (CPC):
**G01S 7/403; G01S 7/4034; G01S 13/4454;**
**G01S 13/58; G01S 13/931;** G01S 2013/932

(86) International application number:
**PCT/EP2022/077535**

(87) International publication number:
**WO 2023/057431 (13.04.2023 Gazette 2023/15)**

(54) **METHOD FOR CALIBRATION OF A RADAR SYSTEM OF A VEHICLE, RADAR SYSTEM AND VEHICLE**

VERFAHREN ZUR KALIBRIERUNG EINES RADARSYSTEMS EINES FAHRZEUGS, RADARSYSTEM UND FAHRZEUG

MÉTHODE D'ÉTALONNAGE D'UN SYSTÈME RADAR D'UN VÉHICULE, SYSTÈME RADAR ET VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.10.2021 DE 102021125603**

(43) Date of publication of application:
**14.08.2024 Bulletin 2024/33**

(73) Proprietor: **Valeo Schalter und Sensoren GmbH 74321 Bietigheim-Bissingen (DE)**

(72) Inventors:
• **KVICERA, Milan**
  **10800 Prague (CZ)**
• **MANDLIK, Michal**
  **10800 Prague (CZ)**
• **BRAZDA, Vladimir**
  **10800 Prague (CZ)**
• **BUSUIOC, Dan**
  **10800 Prague (CZ)**

(74) Representative: **Pothmann, Karsten**
**Valeo Schalter und Sensoren GmbH**
**CDA-IP**
**Laiernstraße 12**
**74321 Bietigheim-Bissingen (DE)**

(56) References cited:
EP-A2- 0 989 414        DE-A1- 102011 015 935
US-A1- 2015 070 207

## Description

### Technical Field

The invention relates to a method for calibration of a radar system of a vehicle for monitoring an environment of the vehicle according to claim 1.

Further the invention relates to a radar system of a vehicle for monitoring an environment of the vehicle according to claim 14.

Furthermore the invention relates to a vehicle with at least one radar system for monitoring an environment of the vehicle according to claim 15.

Advantageous embodiments are provided in the dependent claims.

### State of Technology

From the US 2020/0132812 A1 correction of phase offsets between the antennas of the radar system for AV applications is known. Rather than filtering out the static environment, the static objects within the environment may be leveraged to calibrate the radar while the vehicle is moving. For example, the static objects may be used as a measurement source for the phase offsets between the antennas of the array. The doppler measured from a static object is proportional to the sine of an angle between an axis perpendicular to the direction of the vehicle and the line of sight to the object, and the phase offset between the antennas is proportional to the cosine of the same angle, but is also corrupted by the unknown calibration error. Thus, two different measurement types may be used to determine the angle: the direct angle measurement based on the phase offsets between antennas (e.g., the standard radar measurement) or an angle measurement based on the dopplers measured by the antennas. By comparing the doppler measurements with the phase measurements, the phase offset calibration errors for the antennas may be estimated. US 2015/070207 A1 discloses a radar sensor for use in a vehicle and a machine implemented method for use in self-calibration of a radar sensor mounted to a vehicle. DE 10 2011 015935 A1 discloses a driving assistance system for a vehicle, and a method for determining a correction value for measuring a target angle. EP 0 989 414 A1 discloses methods of calibrating a boresight of a radar antenna and apparatuses for calibrating a radar antenna boresight.

It is an objective of the invention to provide a method, a radar system and a vehicle, where an accuracy of radar measurements can be improved. In particular, a calibration of the radar system can be improved.

### Disclosure of Invention

The objective of the invention can be achieved with the method by the at least one angle correction value is determined from a difference of at least one phase-based target angle and at least one Doppler-based target angle and the at least one angle correction value is stored with at least one of the corresponding target angles in a correction lookup table for the purpose of correcting phase-based target angles at least from subsequent measurements with the radar system to corrected target angles.

According to the invention, the at least one angle correction value is determined from a difference of at least one phase-based target angle and at least one Doppler-based target angle. In this way, the at least one angle correction can be determined with a simple calculation. The at least one angle correction value is stored together with at least one of the corresponding target angles, in particular the corresponding at least one phase-based target angle, in a correction lookup table. In this way, the at least one angle correction value can be used to correct the phase-based target angles, which are determined during subsequent measurements. The corrected target angles characterize the true direction of the detected target with regard to the nominal reference system.

Each radar system has its own radar reference system and its own nominal reference system. The radar reference system defines the actual mounting position and the actual alignment of the respective radar system. The nominal reference system defines the calibration situation with the nominal mounting, in particular the nominal mounting position and the nominal alignment, of the respective radar system in relation to the vehicle, in particular in relation to vehicle axes of the vehicle. In particular, nominal mounting i can characterize the mounting position and the orientation of the radar system after initial mounting on the vehicle. The calibration situation with the nominal mounting of the radar system can be determined after the mounting of the radar system at the vehicle, in particular at the end of the production line.

With the invention, a self-calibration for the radar system can be realized. Thereby the calibration can be performed for the complete field of view or a part of the field of view of the radar system.

Due to the invention, there is no need for any object tracking. In this way, the processing power of the radar system, which is necessary for the calibration, can be reduced. Only information about the detected targets is necessary for the calibration. Information about if detected targets belong to the same track is not necessary.

The inventive calibration is directly achieved in the nominal reference system. As a consequence, a mounting angle of the radar system at the vehicle can be used only as nominal and does not need to be updated at all. With the inventive calibration the deviations between the radar reference system and the nominal reference system can be corrected. Such deviations can originate from mounting tolerances, displacements of the radar system e.g. due to impacts, changes in positions of the antennas, effects due to temperature changes or other factors.

A target in the sense of the invention is an area or a reflection point of an object from which radar signals can be reflected. An object can have one or more such targets. If the object has several targets, radar signals can also be reflected differently from these, for example in different directions. Targets detected with the radar system may be referred to as detected targets for easier distinction.

With the radar system, at least directions of targets can be determined. In addition, the radar system can be used to determine ranges and/or velocities of radar targets relative to the radar system and/or to the vehicle.

The method for calibration, in particular self-calibration, of the radar system can be performed always or only temporarily parallel to regular radar measurements. In this way the accuracy of the regular radar measurements can be further improved.

The invention may be used for radar systems of vehicles, in particular motor vehicles. Advantageously, the invention can be used on land vehicles, in particular passenger cars, lorries, buses, motorcycles or the like, aircraft and/or watercraft. The invention may also be used for radar systems of vehicles which can be operated autonomously or partially autonomously. However, the invention is not limited to vehicles. It can also be used in stationary operation, robotics and/or machines, in particular construction or transport machines, such as cranes, excavators or the like.

The radar system may advantageously be connected to or be part of at least one electronic control device of a vehicle or a machine, in particular a driver assistance system. In this way autonomous or partially autonomous operation of the vehicle or the machine can be enabled.

The invention can be used for radar systems that are designed as front radar systems, corner radar systems, rear radar systems, roof radar systems, underbody radar systems or interior radar systems of vehicles. Accordingly, the radar system can be a front radar system, a corner radar system, a rear radar system, a roof radar system, an underbody radar system or an interior radar system of the vehicle.

The radar system can be used to detect stationary or moving objects, in particular vehicles, persons, animals, obstacles, road unevenness, in particular potholes or stones, road limitations, open spaces, in particular parking spaces, precipitations or the like.

According to the invention, at least one Doppler-based target angle and the at least one angle correction value can be stored with the corresponding at least one phase-based target angle in the correction lookup table for the purpose of correcting phase-based target angles. In this way, for regular measurements, the at least one angle correction value can be taken from the lookup table directly based on at least one measured phase-based target angle. For regular measurements, the determination of the Doppler-based target angle for the correction of the phase-based target angle is not necessary.

According to the invention, multiple phase-based target angles and corresponding Doppler-based target angles can be determined and corresponding angle correction values can be determined from the phase-based target angles and the corresponding Doppler-based target angles. In this way, angle correction values can be determined for phase-based target angles in the complete field of view or a part of the field of view of the radar system.

According to another favorable embodiment, at least one radial velocity of at least one detected target can be determined from at least one Doppler shift of at least one received echo signal and at least one Doppler-based target angle of the at least one detected target can be determined from the at least one radial velocity of the at least one detected target and the vehicle velocity. In this way, the at least one Doppler-based target angle can be realized without directional measurement. So, the Doppler-based target angle can be determined independently from the reference system of the radar system. The Doppler-based target angle can characterize the real direction with respect to the nominal reference system.

The radial velocity of a target is the relative velocity between the target and the radar system in the direction of the line of sight between the target and a reference point of the radar system. The reference point of the radar system can advantageously be an origin of coordinates of the radar reference system.

According to another favorable embodiment, at least one Doppler-based target angle of at least one detected target can be determined from at least one Doppler shift of at least one echo signal by means of at least one Lookup table and/or by means of at least one calculation. In this way the at least one Doppler-based target angle can be determined efficiently.

By means of at least one Lookup table, the determination of the at least one Doppler-based target angle can be performed more quickly. By means of at least one calculation, the at least one Doppler-based target angle can be determined more individually.

According to another favorable embodiment, at least one radial velocity of at least one detected target can be determined from at least one Doppler shift of at least one echo signal by means of at least one calculation and/or by means of at least one lookup table and at least one Doppler-based target angle of at least one detected target can be determined from at least one radial velocity of at least one detected target and a vehicle velocity by means of at least one lookup table and/or by means of at least one calculation. In this way the at least one radial velocity can be determined more efficiently.

By means of at least one lookup table, the determination of the at least one radial velocity can be performed more quickly. By means of at least one calculation, the at least one radial velocity can be determined more individually.

According to another favorable embodiment, at least one radial velocity of at least one detected target can be determined from at least one Doppler shift of at least one received echo signal
and at least one Doppler-based target angle of the at least one detected target can be determined from a quotient of the at least one radial velocity of the at least one detected target and the vehicle velocity. In this way, the at least one radial velocity can be determined independent from the radar reference system.

For a 2D radar system or in the case where the detected target is in the same height as the radar system, the inventive method can utilize the theoretical relationship for the Doppler velocity of static targets towards a moving vehicle:

$$v_r = v_H \cos(\Phi_H).$$

Advantageously, at least one Doppler-based target angle of the at least one detected target can be calculated from the at least one radial velocity of the at least one detected target and the vehicle velocity by use of the following relationship:

$$\Phi_H = \cos^{-1}(v_r / v_H),$$

where $\Phi_H$ is the Doppler-based target angle of the at least one detected target in the nominal reference system, $v_r$ is the radial velocity of the at least one detected target and $v_H$ is the vehicle velocity. The designation "$\Phi$" of the Doppler-based target angle is only exemplary here and does not necessarily mean, that the Doppler-based angle is the azimuth. The destination of the Doppler-based angle can also be "$\Theta$", "$\alpha$", "$\beta$" or the same.

The calibration of a 3D radar system can be straightforward. With a 3D radar system, range, azimuth and elevation of targets can be determined. Advantageously, the calibration of the 3D radar system can start with an initial calibration, for example the self-calibration in azimuth. Afterwards, the calibration in elevation can be done in a similar manner.

According to another favorable embodiment, at least one phase-based target angle of at least one detected target can be determined from at least one phase difference of the at least one echo signal by means of at least one lookup table and/or of at least one calculation. In this way the at least one phase-based target angle can be determined efficiently.

By means of at least one lookup table the determination of the at least one phase-based target angle can be performed more quickly. The lookup table can be realized in advance e.g. with an initial calibration of the radar system. In this way, the lookup table can be used to perform an initial calibration in determining at least one phase-based target angle. The initial calibration of the radar system can be based on electromagnetic simulation or theoretical relation determined by an antenna layout of the radar antennas. Such initial calibration enables an initial classification of detections of stationary targets following a common signal processing chain of the radar system.

By means of at least one calculation, the at least one phase-based target angle can be determined more individually.

According to the invention, multiple initial tuples each with a Doppler-based target angle and a corresponding phase-based target angle which are based on the same echo signal can be determined, and those Doppler-based target angles, who belong to initial tuples with the same phase-based target angles, can be averaged to a corresponding averaged Doppler-based target angle,

each of the averaged Doppler-based target angles with the corresponding phase-based target angle can be assigned to a respective averaging tuple
the angle correction values corresponding to the phase-based target angles can be determined from the difference of the averaged Doppler-based target angle and the phase-based target angle of the corresponding averaging tuples, and the angle correction values with the corresponding phase-based target angles can be stored in the correction lookup table. In this way, fluctuations in the Doppler measurements caused, for example, by noise or other, for example, statistical effects can be compensated.

Tuples can be pairs of values, which can be stored in a suitable storage medium. Such storage media can be part of the radar system and/or of the vehicle. Lookup tables can comprise sets of combinations of values, for example set of tuples.

For ease of distinction, a tuple consisting of a Doppler-based single target angle and the corresponding phase-based target angle derived from the same echo signal is referred to as an "initial tuple". Accordingly, a tuple consisting of an averaged Doppler-based target angle and the corresponding phase-based target angle is referred to as an "averaging tuple".

According to another favorable embodiment, radial velocities of the corresponding detected targets can be determined from the Doppler shifts and quotients from radial velocities and corresponding vehicle velocities can be determined,

multiple initial tuples each with quotients and corresponding phase-based target angles can be determined,
those quotients, who belong to initial tuples with the same phase-based target angles, can be averaged to a corresponding averaged quotient,
corresponding Doppler-based target angles can be determined from the averaged quotients
each of the Doppler-based target angles with the corresponding phase-based target angle can be assigned to an averaging tuple,
the angle correction value corresponding to the phase-based target angles can be determined from the difference of the Doppler-based target angle and the phase-based target angle of the corresponding averaging tuples, and the angle correction values with the corresponding phase-based target angles can be stored in the correction lookup table. In this way, fluctuations in the Doppler measurements caused, for example, by noise or other, for example, statistical effects can be compensated on the basis of the radial velocities and the vehicle velocities more directly.

Advantageously a statistical analysis can be performed on the quotients which then may directly represent a required calibration look-up table. So can erroneous data containing combinations of not stationary detected target and/or wrong angle information can be compensated. Advantageously, a statistical evaluation can be performed, e.g. by using histograms for segments of the field of view. In addition, if tracking is already available at the radar system, detected targets in the vicinity of tracks can be easily disregarded.

According to another favorable embodiment, it can be tested, if the detected at least one target is stationary, and if the at least one detected target is not stationary, the echo signals from the at least one not stationary target will not be used for the determination of the at least one angle correction value. In this way, only stationary targets can be used for calibration. Using stationary targets, the calibration can be performed more accurately.

According to another favorable embodiment, azimuth and/or elevation angle can be determined as at least one corresponding target angle. In this way, the at least one target angle can be specified with respect to coordinate systems that are commonly used as reference systems in vehicles.

According to another favorable embodiment, at least one vehicle velocity can be determined by at least one velocity measurement system, in particular a velocity measurement system of the vehicle. In this way, the at least one vehicle velocity can be determined very accurately.

According to another favorable embodiment at least two target angles, in particular azimuth and elevation angle, can be determined each, which characterize the directions of targets in regard to different reference areas of the reference systems. In this way, three-dimensional directional of targets can be obtained.

Further, the objective of the invention is achieved with the radar system by that, the radar system is comprising means for determining angle correction values from differences of phase-based target angles and Doppler-based target angles and at least one correction lookup table for storing angle correction values with corresponding target angles, in particular with corresponding phase-based target angles.

According to the invention, the radar system comprises means for carrying out the inventive method for calibration of the radar system. In this way, the calibration can be carried out with the radar system itself.

Advantageously, at least one correction lookup table for storing angle correction with corresponding target angles can be designed for storing angle correction values with corresponding phase-based target angles. In this way, for regular measurements, the at least one angle correction value can be taken from the lookup table directly based on at least one measured phase-based target angle. For regular measurements, the determination of the Doppler-based target angle for the correction of the phase-based target angle is not necessary.

Advantageously, the means can be realized by software and/or hardware.

Advantageously, at least a part of the means can be realized within a control and evaluation device of the radar system and/or a driver assistance system of the vehicle.

Advantageously, the radar system can comprise means for determining a vehicle velocity of the vehicle. In this way, there is no need for connecting the radar system with a velocity measurement system of the vehicle.

Additionally or alternatively, the radar system can be connected with a velocity measurement system of the vehicle. In this way, the vehicle velocity which is measured by the velocity measurement system can be used for the calibration of the radar system or for improving a vehicle velocity measured by means of the radar system.

Furthermore, the objective of the invention is achieved with the vehicle by that, the vehicle is comprising means for determining angle correction values from differences of phase-based target angles and Doppler-based target angles

and at least one correction lookup table for storing angle correction values with corresponding target angles, in particular with corresponding phase-based target angles.

According to the invention, the vehicle comprises at least one radar system and means for carrying out the inventive method for calibration of radar systems. At least a part of the means for carrying out the method for calibration may be implemented as part of at least one radar system. The radar system itself is part of the vehicle. Accordingly, part of the radar system is also part of the vehicle. Additionally or alternatively, at least a part of the means for carrying out the method for calibration can be realized separately from the radar system, for example with a control device of the vehicle.

Advantageously, the vehicle can comprise at least one driver assistance system. With the driver assistance system information obtained from the at least one radar system can be used for the autonomous or at least partly autonomous operation of the vehicle. Advantageously, at least one radar system can be connected to at least one driver assistance system. In this way information acquired with the at least one radar system can be transmitted to the at least one driver assistance system.

**Brief Description of Drawings**

The present invention together with the above-mentioned and other objects and advantages may best be understood from the following detailed description of the embodiments, but not restricted to the embodiments, wherein is shown schematically

Figure 1 a top view of a vehicle with three radar systems for monitoring a monitoring area in front and diagonally in front of the vehicle in the direction of travel, a driver assistance system and a velocity measurement system, in a driving situation with an object diagonally in front of the vehicle;

Figure 2 a functional diagram of one of the radar systems with the driver assistance system and the velocity measurement system of the vehicle from Figure 1;

Figure 3 a diagram in which tuples with quotients of radial velocities and vehicle velocities on the ordinate axis and azimuths on the axis of abscissas are depicted;

Figure 4 a side view of the vehicle in the driving situation from Figure 1.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

**Embodiment(s) of Invention**

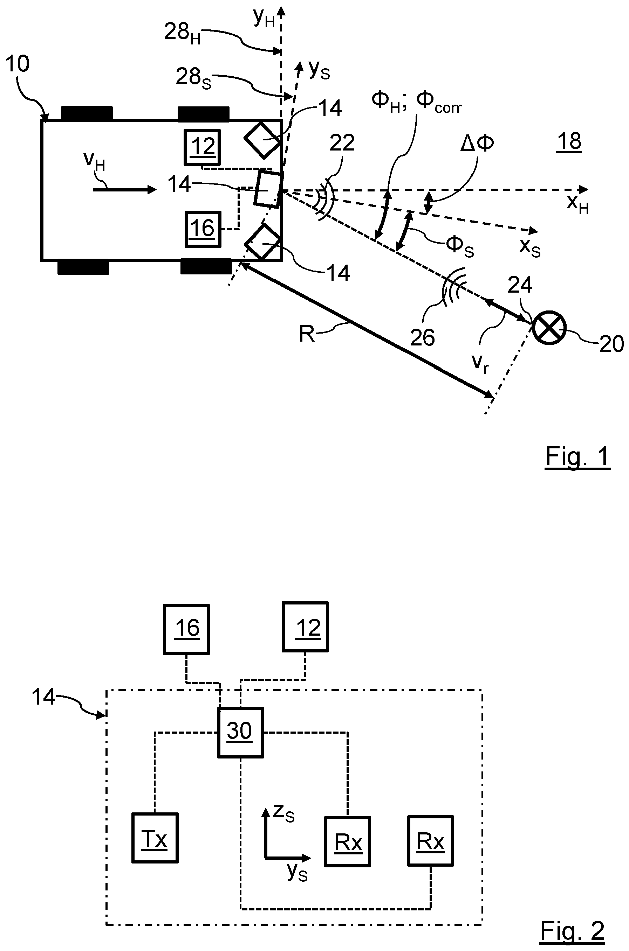

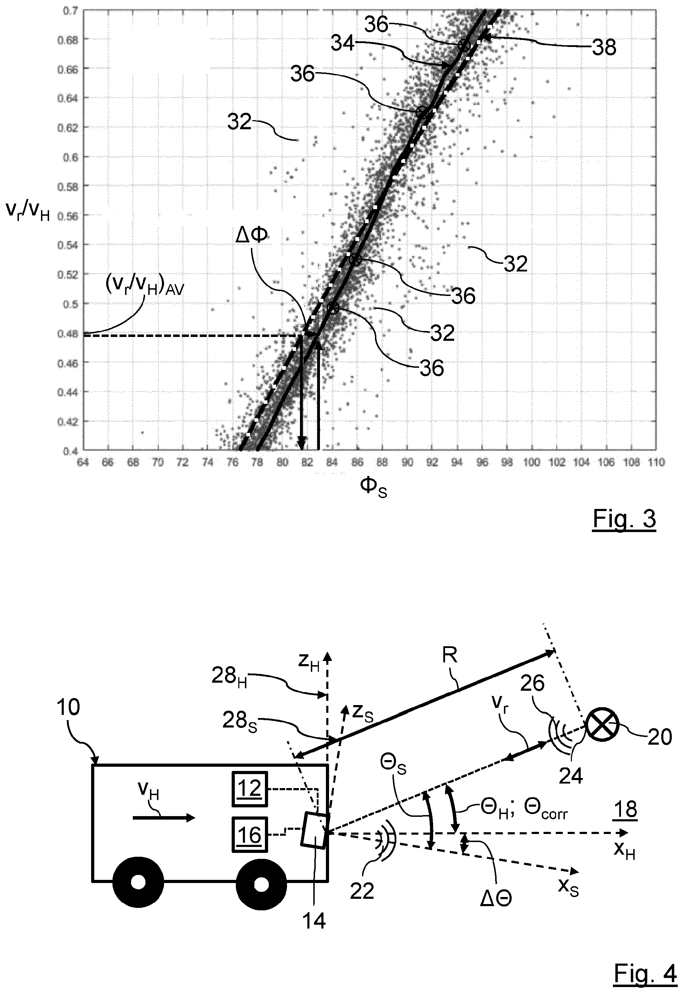

In Figure 1, a vehicle 10 in the form of a passenger car is shown in a top view in a driving situation. Figure 4 shows the vehicle 10 in a side view.

The vehicle 10 comprises a driver assistance system 12, three radar systems 14 and a velocity measurement system 16. The radar systems 14 are functionally connected to the driver assistance system 12 so that information obtained by the radar systems 14 over a monitoring area 18 in the direction of travel in front and diagonally in front of the vehicle 10 can be transmitted to the driver assistance system 12. The driver assistance system 12 can be used to perform functions of the vehicle 10, for example driving functions, autonomously or semi-autonomously.

By way of example, the radar systems 14 are arranged in the front bumper of the vehicle 10 and are directed into the monitoring area 18. One of the radar systems 14 is located in the center of the front bumper and acts as a front radar system 14. The two other radar systems 14 are located on opposite sides of the front bumper and act as corner radar systems 14 each. The radar systems 14 can also be arranged at other locations of the vehicle 10, also in different orientations. The radar systems 14 can be used to detect objects 20 in the monitoring area 18.

The objects 20 can be stationary or moving objects, for example vehicles, people, animals, plants, obstacles, roadway irregularities, for example potholes or stones, roadway boundaries, traffic signs, open spaces, for example parking spaces, precipitation or the like.

The radar systems 14 are identical in terms of their design and mode of operation. The radar systems 14 and their functions are described below using the front radar system 14 as an example.

To detect objects 20, radar signals 22 are transmitted with the radar system 14 into the monitoring area 18. Radar signals 22 which are reflected at targets 24 of objects 20 in the direction of the radar system 14 are received as echo signals 26 with the radar system 14. Object information, such as a range R, a radial velocity $V_r$, and a direction of the detected target 24 relative to reference systems 28, namely a radar reference system $28_S$ of the radar system 14 and a nominal reference system $28_H$ of the vehicle 10, can be determined from the received echo signals 24.

A target 24 in the sense of the invention is an area or a reflection point of an object 20 from which radar signals 22 may be reflected. An object 20 may have one or more such targets 24. If the object 20 has multiple targets 24, radar signals 22 may also be reflected from them differently, for example in different directions. Targets 24 detected with the radar system 14 can be referred to as detected targets 24 for easier distinction.

The radar reference system $28_S$ is an orthogonal x-y-z-coordinate system whose axes are designated $x_S$, $y_S$ and $z_S$. The nominal reference system $28_H$ is an orthogonal x-y-z coordinate system whose axes are designated $x_H$, $y_H$ and $z_H$. Each of the radar systems 14, namely the front radar system and the two corner radar systems, has its own radar reference system $28_S$ and its own nominal reference system $28_H$. The radar reference system 28s defines the actual mounting position and the actual alignment of the respective radar system 14. The nominal reference system $28_H$ defines the calibration situation with the nominal mounting position and the nominal alignment of the respective radar system 14 in relation to the vehicle 10. The calibration situation with the nominal mounting of the radar system 14 is determined after initial mounting of the radar system 14 on the vehicle 10, for example at the end of the production line.

When the radar system 14 is ideally oriented, its radar reference system 28s coincides with its nominal reference system $28_H$. In reality, the radar reference system 28s may deviate from the nominal reference system $28_H$, as exemplified for the front radar system 14 in Figures 1 and 4. This deviation may have various causes. Such deviations can originate from mounting tolerances, displacements of the radar system 10 e.g. due to impacts, changes in positions of the antennas Tx and/or Rx, effects due to temperature changes or other factors.

For example, the $x_H$-axis of the nominal reference system $28_H$ of the front radar system 14 extends in the direction of the longitudinal vehicle axis of the vehicle 10, the $y_H$-axis of the nominal reference system $28_H$ extends parallel to the transverse vehicle axis of the vehicle 10, and the $z_H$-axis of the nominal reference system $28_H$ extends parallel to the vertical vehicle axis of the vehicle 10. The not shown axes of the respective nominal reference systems $28_H$ of the two corner radar systems 14 each run at an angle to the vehicle axes of the vehicle 10.

During operation of the vehicle 10, the driver assistance system 12 uses object information, such as ranges R, radial velocities $V_r$, and directions relative to the nominal reference system $28_H$. In order to accurately determine object information from detected targets 24 relative to the radar reference system 28s, the radar system 14 undergoes an initial calibration. This may be performed, for example, after the radar system 14 is manufactured or after the radar system 14 is initially mounted on the vehicle 10. To correct any discrepancies between the radar reference system 28s and the nominal reference system $28_H$, self-calibrations are performed later, as discussed in more detail below.

As shown in a functional diagram in Figure 2, the radar system 14 has for example two receiving antennas Rx and one transmitting antenna Tx. The receiving antennas Rx and the transmitting antenna Tx are each functionally connected to a control and evaluation device 30 of the radar system 14.

With the control and evaluation device 30, the transmitting antenna Tx can be controlled to transmit radar signals 22. With the receiving antennas Rx, echo signals 26 can be received and converted into electrical signals. The electrical signals can be transmitted to and processed with the control and evaluation device 30. For example, object information about the detected objects 20 can be determined from the electrical signals.

The control and evaluation device 30 is connected to the driver assistance system 12. Via the connection, information determined with the control and evaluation device 30, for example the object information on detected objects 20, can be transmitted to the driver assistance system 12. The transmitted information can be used with the driver assistance system 12 for autonomous or semi-autonomous operation of the vehicle 10.

With the velocity measurement system 16, a vehicle velocity $V_H$ of the vehicle 10 can be determined. The velocity measurement system 16 is connected to the control and evaluation device 30, for example. The determined vehicle velocity $V_H$ can thus be transmitted directly to the radar system 14. The velocity measurement system 16 can also be indirectly connected to the radar system 14 and/or to the driver assistance system 12, for example via a control unit of the vehicle 10.

The direction of a detected target 24 relative to the radar system 14 is characterized by the azimuth $\Phi$ and the elevation angle $\Theta$. The azimuth $\Phi$ is the angle between the x-z plane of the respective reference system 28 and the orthogonal projection of the line of sight between the target 24 and the origin of coordinates of the reference system 28 to the x-y plane. The elevation angle $\Theta$ is the angle between the x-y plane and the line of sight between the target 24 to the origin of coordinates. For ease of distinction, the azimuth $\Phi$ and elevation angle $\Theta$ are each indexed "H" when referenced to the nominal reference system $28_H$. If the azimuth $\Phi$ or the elevation angle $\Theta$ are related to the radar reference system 28s, they are accordingly provided with the index "S".

The self-calibration of the radar system 14 to correct any discrepancies between the radar reference system 28s and the nominal reference system $28_H$ is performed during a movement of the vehicle 10. The self-calibration is performed parallel to the regular radar measurement. This means that for the self-calibration, the same radar signals 22 and echo signals 26 are used as for the regular radar measurement. During the regular radar measurement, object information from objects 20 in the monitoring area 18 are obtained, which then can be used for the driver assistance system 12. The self-calibration can be performed intermittently, for example periodically or when an object 20 is detected.

Further, the vehicle velocity $V_H$ is measured continuously with the velocity measurement system 16.

For the self-calibration, multiple radar measurements are performed. During each radar measurement, with the transmitting antenna Tx a radar signal 22 is transmitted into the monitoring area 18. The radar signal 22 is reflected at targets 24 of objects 20. Figures 1 and 4 illustrate an example of one target 24 of one object 20.

The echo signal 26 which is reflected from the target 24 towards the radar system 14 is received by the receiving antennas $R_X$ and is transformed to corresponding electrical signals. The electrical signals are transmitted to the control and evaluation device 30.

With the control and evaluation device 30 the range R, the radial velocity $V_r$, the Azimuth $\Phi_S$ with respect to the radar reference system 28s and the elevation angle $\Theta_S$ with respect to the radar reference system 28s of the target 24 are determined directly from the echo signal 26.

The range R is for example determined by time-of-flight measurement or some other method that is not of further interest.

The radial velocity $V_r$ is determined from Doppler shifts of the received echo signal 26 exemplary by means of calculation. Alternatively, the radial velocity $V_r$ can be determined from Doppler shifts by means of a given lookup table.

The azimuth $\Phi_S$ and the elevation angle $\Theta_S$ with respect to the radar reference system $28_S$ each are determined by measuring the phase differences of the received echo signal 26 between different receiving antennas $R_X$. For that reason, the azimuth $\Phi_S$ and the elevation angle $\Theta_S$ with respect to the radar reference system $28_S$ are phase-based target angles. Thereby the azimuth $\Phi_S$ and the elevation angle $\Theta_S$ of the detected target 24 exemplary are determined from the phase differences by means of a suitable lookup table. Alternatively, the azimuth $\Phi_S$ and the elevation angle $\Theta_S$ can be determined from the phase differences by calculation.

After the first radar measurement, it is tested if the detected target 24 is stationary. If the detected target 24 is not stationary, the echo signals 26 from the not stationary target 24 will not be used for the self-calibration. The test for stationary targets can also be performed in another state of the self-calibration process.

If the detected target 24 is regarded as stationary, the self-calibration will be performed for the azimuth $\Phi_S$ and then for the elevation angle $\Theta_S$. Alternatively the self-calibration can be performed first for the elevation angle $\Theta_S$ and then for the azimuth $\Phi_S$. As an example, the self-calibration for the azimuth $\Phi_S$ is described below. The self-calibration of the elevation angle $\Theta_S$ can be performed analogously.

In the case where the elevation angle $\Theta_H$ is zero, the following trigonometric relationship exists between the radial velocity $V_r$, the vehicle velocity $V_H$ and the azimuth $\Phi_H$ with respect to the nominal reference system $28_H$:

$$\Phi_H = \cos^{-1}(V_r/V_H) \qquad\qquad (1)$$

For each radar measurement, quotients $(V_r/V_H)$ from radial velocities $V_r$ and corresponding vehicle velocities $V_H$ for each detected target 24 are determined. Since, as mentioned before, the radial velocity $V_r$ is determined from Doppler shifts of the received echo signal 26, the azimuth $\Phi_H$ and the elevation angle $\Theta_H$ with respect to the nominal reference system $28_H$ are Doppler-based target angles.

For compensating fluctuations in the Doppler measurements for the radial velocity $V_r$ caused, for example, by noise or other, for example, statistical effects, the quotients $(V_r/V_H)$ from radial velocities $V_r$ and corresponding vehicle velocities $V_H$ are averaged over the corresponding azimuth $\Phi_S$ with respect to the radar reference system $28_S$.

Therefore, for each detected target 24 and each radar measurement, an initial tuple 32 with the quotient from radar velocity $V_r$ and vehicle velocity $V_H$ together with the corresponding azimuth $\Phi_S$ with respect to the radar reference system $28_S$ is determined. So, with multiple radar measurements with multiple targets 24 multiple initial tuples 32 each with quotients $(V_r/V_H)$ and corresponding azimuths $\Phi_S$ are determined. The initial tuples 32 can be temporally stored for example as pairs of numbers in a storage medium for example of the control and evaluation device 30.

In the diagram in figure 3, the initial tuples 32 are graphically represented as dots each.

Particular quotients $(V_r/V_H)$, who belong to initial tuples 32, are averaged to a corresponding averaged quotient $(V_r/V_H)_{av}$. In figure 3, the averaged quotients $(V_r/V_H)_{av}$ lie on an averaging line 34.

With the averaged quotients $(V_r/V_H)_{av}$ an azimuth $\Phi_H$ with respect to the nominal reference system $28_H$ each for the corresponding azimuth $\Phi_S$ with respect to the radar reference system $28_S$ is calculated from the equation (1). Alternatively, the azimuths $\Phi_H$ can be determined from the averaged quotients $(V_r/V_H)_{av}$ by means of a given Lookup table. The expression "Doppler-based" serves only to better distinguish from other mentioned lookup tables.

Each of the azimuths $\Phi_H$ calculated in this way with the corresponding azimuth $\Phi_S$ is assigned to an averaging tuple 36. The averaging tuples 36 lie on a solid line 34 in figure 3, with four of the averaging tuples 36 shown as crosses as examples, whereas the Doppler-based reference is shown by the dashed line 38. The averaging tuples 36 can be temporally stored for example as pairs of numbers in a storage medium for example of the control and evaluation device 30.

An angle correction value $\Delta\Phi$ corresponding to the azimuths $\Phi_S$ is determined from the difference of the azimuth $\Phi_H$ and the azimuths $\Phi_S$ of each averaging tuple 36. The angle correction value $\Delta\Phi$ represents the correction between the Doppler-based angles, namely the azimuth $\Phi_H$, and the phase-based angles, namely the azimuth $\Phi_S$.

The angle correction values $\Delta\Phi$ with the corresponding azimuths $\Phi_S$ are stored in a correction lookup table. The expression "correction" in front of "lookup table" serves only to better distinguish from other mentioned lookup tables. The correction lookup table can be stored for example as a set of pairs of numbers in a storage medium for example of the control and evaluation device 30.

Alternatively, instead of averaging the quotients ($V_r/V_H$), can first the azimuths $\Phi_H$ with respect to the nominal reference system $28_H$ each for the corresponding azimuth $\Phi_S$ with respect to the radar reference system $28_S$ be calculated from the equation (1). Then the azimuths $\Phi_H$ corresponding to the same azimuth $\Phi_S$ can be averaged.

For subsequent regular radar measurements with the radar system 14, the azimuths $\Phi_S$ with respect to the radar reference system $28_S$ are corrected with corresponding angle correction values $\Delta\Phi$ from the correction lookup table and are provided as corrected azimuths $\Phi_{corr}$. In this way, corrected azimuths $\Phi_{corr}$ are determined based on the phase shift measurements.

Additionally, for the past radar measurements azimuths $\Phi_S$ can be re-corrected with corresponding angle correction values $\Delta\Phi$.

As already mentioned the self-calibration of the elevation angle $\Theta_S$ with respect to the radar reference system $28_S$ is be performed analogously to the self-calibration of the azimuths $\Phi_S$ with respect to the radar reference system 28s. For correction of the elevation angles $\Theta_S$ a corresponding correction lookup table with corresponding angle correction values $\Delta\Theta$ is determined. The elevation angles $\Theta_S$ are corrected with the corresponding angle correction values $\Delta\Theta$ from the correction lookup table and are provided as corrected elevation angles $\Theta_{corr}$.

**Claims**

1. Method for calibration of a radar system (14) of a vehicle (10) for monitoring an environment of the vehicle (10), where during a movement of the vehicle (10) with the radar system (14) at least one radar signal (22) is transmitted into a monitoring area (18),

   with the radar system (14) at least one echo signal (26) of at least one radar signal (22) is received, which is reflected from at least one target (24),
   at least one phase-based target angle ($\Phi s, \Theta_S$) is determined from at least one phase difference of the at least one received echo signal (26), which is received with different antennas (Rx) of the radar system (14), wherein the phase-based target angle ($\Phi s, \Theta_S$) characterizes the direction of the at least one detected target (24) with respect to a radar reference system ($28_S$) of the radar system (14),
   at least one Doppler-based target angle ($\Phi_H, \Theta_H$) is determined from at least one Doppler shift of the at least one received echo signal (26) and a vehicle velocity ($v_H$) of the vehicle (10), wherein the Doppler-based target angle ($\Phi_H, \Theta_H$) characterizes the direction of the at least one detected target (24) with respect to a nominal reference system ($28_H$) at the vehicle (10),
   at least one angle correction value ($\Delta\Phi, \Delta\Theta$) is determined by comparing the at least one phase-based target angle ($\Phi s, \Theta_S$) and the at least one Doppler-based target angle ($\Phi_H, \Theta_H$),
   the at least one angle correction value ($\Delta\Phi, \Delta\Theta$) is determined from a difference of at least one phase-based target angle ($\Phi s, \Theta_S$) and at least one Doppler-based target angle ($\Phi_H, \Theta_H$) and the at least one angle correction value ($\Delta\Phi, \Delta\Theta$) is stored with at least one of the corresponding target angles ($\Phi s, \Theta_S$) in a correction lookup table for the purpose of correcting phase-based target angles ($\Phi s, \Theta_S$) at least from subsequent measurements with the radar system (14) to corrected target angles ($\Phi_{corr}, \Theta_{corr}$), **characterized in that**
   multiple initial tuples (32) each with a Doppler-based target angle ($\Phi_H, \Theta_H$) and a corresponding phase-based target angle ($\Phi s, \Theta_S$) which are based on the same echo signal (26) are determined,
   and those Doppler-based target angles ($\Phi_H, \Theta_H$), who belong to initial tuples (32) with the same phase-based target angles ($\Phi s, \Theta_S$), are averaged to a corresponding averaged Doppler-based target angle,
   each of the averaged Doppler-based target angles with the corresponding phase-based target angle ($\Phi s, \Theta_S$) are assigned to a respective averaging tuple,
   the angle correction values ($\Delta\Phi, \Delta\Theta$) corresponding to the phase-based target angles ($\Phi s, \Theta_S$) are determined from the difference of the averaged Doppler-based target angle and the phase-based target angle ($\Phi s, \Theta_S$) of the corresponding averaging tuples, and the angle correction values ($\Delta\Phi, \Delta\Theta$) with the corresponding phase-based target angles ($\Phi s, \Theta_S$) are stored in the correction lookup table.

2. Method according to claim 1, **characterized in that** at least one Doppler-based target angle ($\Phi_H, \Theta_H$) and the at least one angle correction value ($\Delta\Phi, \Delta\Theta$) is stored with the corresponding at least one phase-based target angle ($\Phi s, \Theta_S$) in the correction lookup table for the purpose of correcting phase-based target angles ($\Phi_S, \Theta_S$)

3. Method according to claim 1 or 2, **characterized in that** multiple phase-based target angles ($\Phi_S$, $\Theta_S$) and corresponding Doppler-based target angles ($\Phi_H$, $\Theta_H$) are determined and corresponding angle correction values ($\Delta\Phi$, $\Delta\Theta$) are determined from the phase-based target angles ($\Phi_S$, $\Theta_S$) and the corresponding Doppler-based target angles ($\Phi_H$, $\Theta_H$).

4. Method according to one of the previous claims, **characterized in that** at least one radial velocity ($v_r$) of at least one detected target (24) is determined from at least one Doppler shift of at least one received echo signal (26) and at least one Doppler-based target angle ($\Phi_H$, $\Theta_H$) of the at least one detected target (24) is determined from the at least one radial velocity ($v_r$) of the at least one detected target (24) and the vehicle velocity ($v_H$).

5. Method according to one of the previous claims, **characterized in that** at least one Doppler-based target angle ($\Phi_H$, $\Theta_H$) of at least one detected target (24) is determined from at least one Doppler shift of at least one echo signal (26) by means of at least one Lookup table and/or by means of at least one calculation.

6. Method according to claim 4 or claim 5 in combination with claim 4, **characterized in that** the at least one radial velocity ($v_r$) of at least one detected target (24) is determined by means of at least one calculation and/or by means of at least one lookup table
and the at least one Doppler-based target angle ($\Phi_H$, $\Theta_H$) is determined by means of at least one lookup table and/or by means of at least one calculation.

7. Method according claim 4 or claim 5 in combination with claim 4, **characterized in that**
the at least one Doppler-based target angle ($\Phi_H$, $\Theta_H$) of the at least one detected target (24) is determined from a quotient of the at least one radial velocity ($v_r$) of the at least one detected target (24) and the vehicle velocity ($v_H$).

8. Method according to one of the previous claims, **characterized in that** at least one phase-based target angle ($\Phi_S$, $\Theta_S$) of at least one detected target (24) is determined from at least one phase difference of the at least one echo signal (26) by means of at least one lookup table and/or of at least one calculation.

9. Method according to one of the previous claims, **characterized in that**

radial velocities ($v_r$) of the corresponding detected targets (24) are determined from the Doppler shifts and quotients from radial velocities ($v_r$) and corresponding vehicle velocities ($v_H$) are determined,
multiple initial tuples (32) each with quotients and corresponding phase-based target angles ($\Phi_S$, $\Theta_S$) are determined,
those quotients, who belong to initial tuples (32) with the same phase-based target angles ($\Phi_S$, $\Theta_S$), are averaged to a corresponding averaged quotient $(v_r/v_H)_{AV}$,
corresponding Doppler-based target angles ($\Phi_H$, $\Theta_H$) are determined from the averaged quotients $(v_r/v_H)_{AV}$,
each of the Doppler-based target angles ($\Phi_H$, $\Theta_H$) with the corresponding phase-based target angle ($\Phi_S$, $\Theta_S$) are assigned to an averaging tuple (36)
the angle correction value ($\Delta\Phi$, $\Delta\Theta$) corresponding to the phase-based target angles ($\Phi_S$, $\Theta_S$) are determined from the difference of the Doppler-based target angle ($\Phi_H$, $\Theta_H$) and the phase-based target angle ($\Phi_S$, $\Theta_S$) of the corresponding averaging tuples (36), and the angle correction values ($\Delta\Phi$, $\Delta\Theta$) with the corresponding phase-based target angles ($\Phi_S$, $\Theta_S$) are stored in the correction lookup table.

10. Method according to one of the previous claims, **characterized in that** it is tested, if the detected at least one target (24) is stationary, and if the at least one detected target (24) is not stationary, the echo signals (26) from the at least one not stationary target (24) will not be used for the determination of the at least one angle correction value ($\Delta\Phi$, $\Delta\Theta$).

11. Method according to one of the previous claims, **characterized in that** azimuth ($\Phi$) and/or elevation angle ($\Theta$) can be determined as at least one corresponding target angle.

12. Method according to one of the previous claims, **characterized in that** at least one vehicle velocity ($v_H$) is determined by at least one velocity measurement system (16), in particular a velocity measurement system (16) of the vehicle (10).

13. Method according to one of the previous claims, **characterized in that** at least two target angles ($\Phi$, $\Theta$), in particular azimuth and elevation angle, is determined each, which characterize the directions of targets (24) in regard to different reference areas of the reference systems (28).

14. Radar system (14) of a vehicle (10) for monitoring an environment of the vehicle (10), comprising

at least one antenna (Tx) for transmitting radar signals (22) into a monitoring area (18), at least two antennas (Rx) for receiving echo signals (26) of radar signals (22) which are reflected from at least one target (24), means for determining phase-based target angles ($\Phi$s, $\Theta_S$) from phase differences of received echo signals (26), which can be received with different antennas (Rx), where the phase-based target angles ($\Phi$s, $\Theta_S$) characterize directions of detected targets (24) with respect to a radar reference system ($28_S$) of the radar system (14), means for determining Doppler-based target angles ($\Phi_H$, $\Theta_H$) from Doppler shifts of received echo signals (26) and vehicle velocities ($v_H$) of the vehicle (10), wherein Doppler-based target angles ($\Phi_H$, $\Theta_H$) characterize directions of detected targets (24) with respect to a nominal reference system ($28_H$) at the vehicle (10), means (30) for determining angle correction values ($\Delta\Phi$, $\Delta\Theta$) by comparing phase-based target angles ($\Phi$s, $\Theta_S$) and Doppler-based target angles ($\Phi_H$, $\Theta_H$), wherein the radar system (14) is comprising means (30) for determining angle correction values ($\Delta\Phi$, $\Delta\Theta$) from differences of phase-based target angles ($\Phi_S$, $\Theta_S$) and Doppler-based target angles ($\Phi_H$, $\Theta_H$) and at least one correction lookup table for storing angle correction values ($\Delta\Phi$, $\Delta\Theta$) with corresponding target angles, in particular with corresponding phase-based target angles ($\Phi_S$, $\Theta_S$), **characterized in** further comprising means for determining multiple initial tuples (32) each with a Doppler-based target angle ($\Phi_H$, $\Theta_H$) and a corresponding phase-based target angle ($\Phi_S$, $\Theta_S$) which are based on the same echo signal (26) are determined, for averaging those Doppler-based target angles ($\Phi_H$, $\Theta_H$), who belong to initial tuples (32) with the same phase-based target angles ($\Phi$s, $\Theta_S$), to a corresponding averaged Doppler-based target angle, for assigning each of the averaged Doppler-based target angles with the corresponding phase-based target angle ($\Phi$s, $\Theta_S$) to a respective averaging tuple, for determining the angle correction values ($\Delta\Phi$, $\Delta\Theta$) corresponding to the phase-based target angles ($\Phi$s, $\Theta_S$) from the difference of the averaged Doppler-based target angle and the phase-based target angle ($\Phi$s, $\Theta_S$) of the corresponding averaging tuples, and for storing the angle correction values ($\Delta\Phi$, $\Delta\Theta$) with the corresponding phase-based target angles ($\Phi$s, $\Theta_S$) in the correction lookup table.

15. Vehicle (10) with at least one radar system (14) according to the previous claim.

**Patentansprüche**

1. Verfahren zur Kalibrierung eines Radarsystems (14) eines Fahrzeugs (10) zur Überwachung einer Umgebung des Fahrzeugs (10), wobei während einer Bewegung des Fahrzeugs (10) mit dem Radarsystem (14) mindestens ein Radarsignal (22) in einen Überwachungsbereich (18) gesendet wird, mit dem Radarsystem (14) mindestens ein Echosignal (26) von mindestens einem Radarsignal (22) empfangen wird, das von mindestens einem Ziel (24) reflektiert wird, mindestens ein phasenbasierter Zielwinkel (Os, Os) aus mindestens einer Phasendifferenz des mindestens einen empfangenen Echosignals (26) bestimmt wird, das mit verschiedenen Antennen (Rx) des Radarsystems (14) empfangen wird, wobei der phasenbasierte Zielwinkel ($\Phi$s, Os) die Richtung des mindestens einen detektierten Ziels (24) bezüglich eines Radarreferenzsystems ($28$s) des Radarsystems (14) charakterisiert, mindestens ein Doppler-basierter Zielwinkel ($\Phi_H$, $\Theta_H$) aus mindestens einer Dopplerverschiebung des mindestens einen empfangenen Echosignals (26) und einer Fahrzeuggeschwindigkeit (VH) des Fahrzeugs (10) bestimmt wird, wobei der Doppler-basierte Zielwinkel ($\Phi_H$, $\Theta_H$) die Richtung des mindestens einen detektierten Ziels (24) bezüglich eines nominalen Referenzsystems (28) am Fahrzeug (10) charakterisiert, mindestens ein Winkelkorrekturwert ($\Delta\Phi$, $\Delta\Theta$) durch Vergleich des mindestens einen phasenbasierten Zielwinkels (Os, Os) und des mindestens einen Doppler-basierten Zielwinkels ($\Phi_H$, $\Theta_H$) bestimmt wird, der mindestens eine Winkelkorrekturwert ($\Delta\Phi$, $\Delta\Theta$) aus einer Differenz von mindestens einem phasenbasierten Zielwinkel (Os, Os) und mindestens einem Doppler-basierten Zielwinkel ($\Phi_H$, $\Theta_H$) bestimmt wird und der mindestens eine Winkelkorrekturwert ($\Delta\Phi$, $\Delta\Theta$) mit mindestens einem der entsprechenden Zielwinkel (Os, Os) in einer Korrektur-Lookup-Tabelle zum Zweck der Korrektur phasenbasierter Zielwinkel (Os, Os) mindestens aus nachfolgenden Messungen mit dem Radarsystem (14) zu korrigierten Zielwinkeln (corr, Ocorr) gespeichert wird, **dadurch gekennzeichnet, dass** mehrere Anfangstuples (32) jeweils mit einem Doppler-basierten Zielwinkel ($\Phi_H$, $\Theta_H$) und einem entsprechenden phasenbasierten Zielwinkel (Os, Os), die auf demselben Echosignal (26) basieren, bestimmt werden, und jene Doppler-basierten Zielwinkel ($\Phi_H$, $\Theta_H$), die zu Anfangstuples (32) mit den gleichen phasenbasierten Zielwinkeln (Os, Os) gehören, zu einem entsprechenden gemittelten Doppler-basierten Zielwinkel gemittelt werden, jeder der gemittelten Doppler-basierten Zielwinkel mit dem entsprechenden phasenbasierten Zielwinkel (Os, Os) einem jeweiligen Mittelungstupel zugeordnet wird, die Winkelkorrekturwerte ($\Delta\Phi$, $\Delta\Theta$) entsprechend den phasenbasierten Zielwinkeln (Os, Os) aus der Differenz des gemittelten Doppler-basierten Zielwinkels und des phasenbasierten Zielwinkels (Os, Os) der entsprechenden Mittelungstuples bestimmt werden, und die Winkelkorrekturwerte ($\Delta\Phi$, $\Delta\Theta$) mit den entsprechenden phasenbasierten Zielwinkeln (Os, Os) in der Korrektur-Lookup-Tabelle gespeichert werden.

2. Verfahren nach Anspruch 1, **dadurch gekennzeichnet, dass** mindestens ein Doppler-basierter Zielwinkel ($\Phi_H$, $\Theta_H$) und der mindestens eine Winkelkorrekturwert ($\Delta\Phi$, $\Delta\Theta$) mit dem entsprechenden mindestens einen phasenbasierten Zielwinkel (Os, Os) in der Korrektur-Lookup-Tabelle zum Zweck der Korrektur phasenbasierter Zielwinkel ($\Phi$s, Os) gespeichert wird.

3. Verfahren nach Anspruch 1 oder 2, **dadurch gekennzeichnet, dass** mehrere phasenbasierte Zielwinkel (Os, Os) und entsprechende Doppler-basierte Zielwinkel ($\Phi_H$, $\Theta_H$) bestimmt werden und entsprechende Winkelkorrekturwerte ($\Delta\Phi$, $\Delta\Theta$) aus den phasenbasierten Zielwinkeln (Os, Os) und den entsprechenden Doppler-basierten Zielwinkeln ($\Phi_H$, $\Theta_H$) bestimmt werden.

4. Verfahren nach einem der vorhergehenden Ansprüche, **dadurch gekennzeichnet, dass** mindestens eine radiale Geschwindigkeit (vr) von mindestens einem detektierten Ziel (24) aus mindestens einer Dopplerverschiebung von mindestens einem empfangenen Echosignal (26) bestimmt wird und mindestens ein Doppler-basierter Zielwinkel ($\Phi_H$, $\Theta_H$) des mindestens einen detektierten Ziels (24) aus der mindestens einen radialen Geschwindigkeit (vr) des mindestens einen detektierten Ziels (24) und der Fahrzeuggeschwindigkeit ($v_H$) bestimmt wird.

5. Verfahren nach einem der vorhergehenden Ansprüche, **dadurch gekennzeichnet, dass** mindestens ein Doppler-basierter Zielwinkel ($\Phi_H$, $\Theta_H$) von mindestens einem detektierten Ziel (24) aus mindestens einer Dopplerverschiebung von mindestens einem Echosignal (26) mittels mindestens einer Lookup-Tabelle und/oder mittels mindestens einer Berechnung bestimmt wird.

6. Verfahren nach Anspruch 4 oder Anspruch 5 in Kombination mit Anspruch 4, **dadurch gekennzeichnet, dass** die mindestens eine radiale Geschwindigkeit (vr) von mindestens einem detektierten Ziel (24) mittels mindestens einer Berechnung und/oder mittels mindestens einer Lookup-Tabelle bestimmt wird und der mindestens eine Doppler-basierte Zielwinkel ($\Phi_H$, $\Theta_H$) mittels mindestens einer Lookup-Tabelle und/oder mittels mindestens einer Berechnung bestimmt wird.

7. Verfahren nach Anspruch 4 oder Anspruch 5 in Kombination mit Anspruch 4, **dadurch gekennzeichnet, dass** der mindestens eine Doppler-basierte Zielwinkel ($\Phi_H$, $\Theta_H$) des mindestens einen detektierten Ziels (24) aus einem Quotienten der mindestens einen radialen Geschwindigkeit (vr) des mindestens einen detektierten Ziels (24) und der Fahrzeuggeschwindigkeit ($v_H$) bestimmt wird.

8. Verfahren nach einem der vorhergehenden Ansprüche, **dadurch gekennzeichnet, dass** mindestens ein phasenbasierter Zielwinkel (Os, Os) von mindestens einem detektierten Ziel (24) aus mindestens einer Phasendifferenz des mindestens einen Echosignals (26) mittels mindestens einer Lookup-Tabelle und/oder mindestens einer Berechnung bestimmt wird.

9. Verfahren nach einem der vorhergehenden Ansprüche, **dadurch gekennzeichnet, dass** radiale Geschwindigkeiten (vr) der entsprechenden detektierten Ziele (24) aus den Dopplerverschiebungen bestimmt werden und Quotienten aus radialen Geschwindigkeiten (vr) und entsprechenden Fahrzeuggeschwindigkeiten (vi) bestimmt werden, mehrere Anfangstuples (32) jeweils mit Quotienten und entsprechenden phasenbasierten Zielwinkeln (Os, Os) bestimmt werden, jene Quotienten, die zu Anfangstuples (32) mit den gleichen phasenbasierten Zielwinkeln ($\Phi$s, Os) gehören, zu einem entsprechenden gemittelten Quotienten (vr/VH)AV gemittelt werden, entsprechende Doppler-basierte Zielwinkel ($\Phi_H$, $\Theta_H$) aus den gemittelten Quotienten (vr/VH)AV bestimmt werden, jeder der Doppler-basierten Zielwinkel ($\Phi_H$, $\Theta_H$) mit dem entsprechenden phasenbasierten Zielwinkel (Os, Os) einem Mittelungstupel (36) zugeordnet wird, der Winkelkorrekturwert ($\Delta\Phi$, $\Delta\Theta$) entsprechend den phasenbasierten Zielwinkeln ($\Phi$s, Os) aus der Differenz des Doppler-basierten Zielwinkels ($\Phi_H$, $\Theta_H$) und des phasenbasierten Zielwinkels (Os, Os) der entsprechenden Mittelungstuples (36) bestimmt wird, und die Winkelkorrekturwerte ($\Delta\Phi$, $\Delta\Theta$) mit den entsprechenden phasenbasierten Zielwinkeln (Os, Os) in der Korrektur-Lookup-Tabelle gespeichert werden.

10. Verfahren nach einem der vorhergehenden Ansprüche, **dadurch gekennzeichnet, dass** geprüft wird, ob das detektierte mindestens eine Ziel (24) stationär ist, und wenn das mindestens eine detektierte Ziel (24) nicht stationär ist, die Echosignale (26) von dem mindestens einen nicht stationären Ziel (24) nicht für die Bestimmung des mindestens einen Winkelkorrekturwerts ($\Delta\Phi$, $\Delta\Theta$) verwendet werden.

11. Verfahren nach einem der vorhergehenden Ansprüche, **dadurch gekennzeichnet, dass** Azimut ($\Phi$) und/oder Elevationswinkel ($\Theta$) als mindestens ein entsprechender Zielwinkel bestimmt werden können.

12. Verfahren nach einem der vorhergehenden Ansprüche, **dadurch gekennzeichnet, dass** mindestens eine Fahrzeuggeschwindigkeit (v) durch mindestens ein Geschwindigkeitsmesssystem (16), insbesondere ein Geschwindigkeitsmesssystem (16) des Fahrzeugs (10), bestimmt wird.

13. Verfahren nach einem der vorhergehenden Ansprüche, **dadurch gekennzeichnet, dass** jeweils mindestens zwei Zielwinkel ($\Phi$, $\Theta$), insbesondere Azimut und Elevationswinkel, bestimmt werden, die die Richtungen von Zielen (24) in Bezug auf verschiedene Referenzbereiche der Referenzsysteme (28) charakterisieren.

14. Radarsystem (14) eines Fahrzeugs (10) zur Überwachung einer Umgebung des Fahrzeugs (10), umfassend mindestens eine Antenne (Tx) zum Senden von Radarsignalen (22) in einen Überwachungsbereich (18), mindestens zwei Antennen (Rx) zum Empfangen von Echosignalen (26) von Radarsignalen (22), die von mindestens einem Ziel (24) reflektiert werden, Mittel zum Bestimmen phasenbasierter Zielwinkel (Os, Os) aus Phasendifferenzen empfangener Echosignale (26), die mit verschiedenen Antennen (Rx) empfangen werden können, wobei die phasenbasierten Zielwinkel ($\Phi$s, Os) Richtungen detektierter Ziele (24) bezüglich eines Radarreferenzsystems (28s) des Radarsystems (14) charakterisieren, Mittel zum Bestimmen Doppler-basierter Zielwinkel ($\Phi_H$, $\Theta_H$) aus Dopplerverschiebungen empfangener Echosignale (26) und Fahrzeuggeschwindigkeiten (vi) des Fahrzeugs (10), wobei Doppler-basierte Zielwinkel ($\Phi_H$, $\Theta_H$) Richtungen detektierter Ziele (24) bezüglich eines nominalen Referenzsystems (28) am Fahrzeug (10) charakterisieren, Mittel (30) zum Bestimmen von Winkelkorrekturwerten ($\Delta\Phi$, $\Delta\Theta$) durch Vergleich phasenbasierter Zielwinkel (Os, Os) und Doppler-basierter Zielwinkel ($\Phi_H$, $\Theta_H$), wobei das Radarsystem (14) Mittel (30) zum Bestimmen von Winkelkorrekturwerten ($\Delta\Phi$, $\Delta\Theta$) aus Differenzen von phasenbasierten Zielwinkeln (Os, Os) und Doppler-basierten Zielwinkeln ($\Phi_H$, $\Theta_H$) und mindestens eine Korrektur-Lookup-Tabelle zum Speichern von Winkelkorrekturwerten ($\Delta\Phi$, $\Delta\Theta$) mit entsprechenden Zielwinkeln, insbesondere mit entsprechenden phasenbasierten Zielwinkeln (Os, Os), umfasst, **dadurch gekennzeichnet, dass**
es weiter Mittel umfasst zum Bestimmen mehrerer Anfangstuples (32) jeweils mit einem Doppler-basierten Zielwinkel ($\Phi_H$, $\Theta_H$) und einem entsprechenden phasenbasierten Zielwinkel (Os, Os), die auf demselben Echosignal (26) basieren, zum Mitteln jener Doppler-basierten Zielwinkel ($\Phi_H$, $\Theta_H$), die zu Anfangstuples (32) mit den gleichen phasenbasierten Zielwinkeln (Os, Os) gehören, zu einem entsprechenden gemittelten Doppler-basierten Zielwinkel, zum Zuordnen jedes der gemittelten Doppler-basierten Zielwinkel mit dem entsprechenden phasenbasierten Zielwinkel (Os, Os) zu einem jeweiligen Mittelungstupel, zum Bestimmen der Winkelkorrekturwerte ($\Delta\Phi$, $\Delta\Theta$) entsprechend den phasenbasierten Zielwinkeln (Os, Os) aus der Differenz des gemittelten Doppler-basierten Zielwinkels und des phasenbasierten Zielwinkels (Os, Os) der entsprechenden Mittelungstuples, und zum Speichern der Winkelkorrekturwerte ($\Delta\Phi$, $\Delta\Theta$) mit den entsprechenden phasenbasierten Zielwinkeln (Os, Os) in der Korrektur-Lookup-Tabelle.

15. Fahrzeug (10) mit mindestens einem Radarsystem (14) nach dem vorhergehenden Anspruch.

**Revendications**

1. Méthode pour l'étalonnage d'un système radar (14) d'un véhicule (10) pour surveiller un environnement du véhicule (10), où pendant un mouvement du véhicule (10) avec le système radar (14) au moins un signal radar (22) est transmis dans une zone de surveillance (18), avec le système radar (14) au moins un signal d'écho (26) d'au moins un signal radar (22) est reçu, qui est réfléchi par au moins une cible (24), au moins un angle de cible basé sur la phase (Os, Os) est déterminé à partir d'au moins une différence de phase de l'au moins un signal d'écho reçu (26), qui est reçu avec différentes antennes (Rx) du système radar (14), où l'angle de cible basé sur la phase ($\Phi$s, Os) caractérise la direction de l'au moins une cible détectée (24) par rapport à un système de référence radar (28s) du système radar (14), au moins un angle de cible basé sur l'effet Doppler ($\Phi_H$, $\Theta_H$) est déterminé à partir d'au moins un décalage Doppler de l'au moins un signal d'écho reçu (26) et une vitesse du véhicule (VH) du véhicule (10), où l'angle de cible basé sur l'effet Doppler ($\Phi_H$, $\Theta_H$) caractérise la direction de l'au moins une cible détectée (24) par rapport à un système de référence nominal (28) du véhicule (10), au moins une valeur de correction d'angle ($\Delta\Phi$, $\Delta\Theta$) est déterminée en comparant l'au moins un angle de cible basé sur la phase (Os, Os) et l'au moins un angle de cible basé sur l'effet Doppler ($\Phi_H$, $\Theta_H$), l'au

moins une valeur de correction d'angle ($\Delta\Phi$, $\Delta\Theta$) est déterminée à partir d'une différence d'au moins un angle de cible basé sur la phase (Os, Os) et au moins un angle de cible basé sur l'effet Doppler ($\Phi_H$, $\Theta_H$) et l'au moins une valeur de correction d'angle ($\Delta\Phi$, $\Delta\Theta$) est stockée avec au moins un des angles de cible correspondants (Os, Os) dans une table de consultation de correction dans le but de corriger les angles de cible basés sur la phase (Os, Os) au moins à partir de mesures ultérieures avec le système radar (14) en angles de cible corrigés (corr, Ocorr), **caractérisée en ce que** plusieurs tuples initiaux (32) chacun avec un angle de cible basé sur l'effet Doppler ($\Phi_H$, $\Theta_H$) et un angle de cible basé sur la phase correspondant (Os, Os) qui sont basés sur le même signal d'écho (26) sont déterminés, et ces angles de cible basés sur l'effet Doppler ($\Phi_H$, $\Theta_H$), qui appartiennent à des tuples initiaux (32) avec les mêmes angles de cible basés sur la phase (Os, Os), sont moyennés en un angle de cible basé sur l'effet Doppler moyenné correspondant, chacun des angles de cible basés sur l'effet Doppler moyennés avec l'angle de cible basé sur la phase correspondant (Os, Os) sont assignés à un tuple de moyennage respectif, les valeurs de correction d'angle ($\Delta\Phi$, $\Delta\Theta$) correspondant aux angles de cible basés sur la phase (Os, Os) sont déterminées à partir de la différence de l'angle de cible basé sur l'effet Doppler moyenné et l'angle de cible basé sur la phase (Os, Os) des tuples de moyennage correspondants, et les valeurs de correction d'angle ($\Delta\Phi$, $\Delta\Theta$) avec les angles de cible basés sur la phase correspondants (Os, Os) sont stockées dans la table de consultation de correction.

2. Méthode selon la revendication 1, **caractérisée en ce qu'**au moins un angle de cible basé sur l'effet Doppler ($\Phi_H$, $\Theta_H$) et l'au moins une valeur de correction d'angle ($\Delta\Phi$, $\Delta\Theta$) est stockée avec l'au moins un angle de cible basé sur la phase correspondant (Os, Os) dans la table de consultation de correction dans le but de corriger les angles de cible basés sur la phase ($\Phi$s, Os)

3. Méthode selon la revendication 1 ou 2, **caractérisée en ce que** plusieurs angles de cible basés sur la phase (Os, Os) et angles de cible basés sur l'effet Doppler correspondants ($\Phi_H$, $\Theta_H$) sont déterminés et les valeurs de correction d'angle correspondantes ($\Delta\Phi$, $\Delta\Theta$) sont déterminées à partir des angles de cible basés sur la phase (Os, Os) et des angles de cible basés sur l'effet Doppler correspondants ($\Phi_H$, $\Theta_H$).

4. Méthode selon l'une des revendications précédentes, **caractérisée en ce qu'**au moins une vitesse radiale (vr) d'au moins une cible détectée (24) est déterminée à partir d'au moins un décalage Doppler d'au moins un signal d'écho reçu (26) et au moins un angle de cible basé sur l'effet Doppler ($\Phi_H$, $\Theta_H$) de l'au moins une cible détectée (24) est déterminé à partir de l'au moins une vitesse radiale (vr) de l'au moins une cible détectée (24) et de la vitesse du véhicule ($v_H$).

5. Méthode selon l'une des revendications précédentes, **caractérisée en ce qu'**au moins un angle de cible basé sur l'effet Doppler ($\Phi_H$, $\Theta_H$) d'au moins une cible détectée (24) est déterminé à partir d'au moins un décalage Doppler d'au moins un signal d'écho (26) au moyen d'au moins une table de consultation et/ou au moyen d'au moins un calcul.

6. Méthode selon la revendication 4 ou la revendication 5 en combinaison avec la revendication 4, **caractérisée en ce que** l'au moins une vitesse radiale (vr) d'au moins une cible détectée (24) est déterminée au moyen d'au moins un calcul et/ou au moyen d'au moins une table de consultation et l'au moins un angle de cible basé sur l'effet Doppler ($\Phi_H$, $\Theta_H$) est déterminé au moyen d'au moins une table de consultation et/ou au moyen d'au moins un calcul.

7. Méthode selon la revendication 4 ou la revendication 5 en combinaison avec la revendication 4, **caractérisée en ce que** l'au moins un angle de cible basé sur l'effet Doppler ($\Phi_H$, $\Theta_H$) de l'au moins une cible détectée (24) est déterminé à partir d'un quotient de l'au moins une vitesse radiale (vr) de l'au moins une cible détectée (24) et de la vitesse du véhicule ($v_H$).

8. Méthode selon l'une des revendications précédentes, **caractérisée en ce qu'**au moins un angle de cible basé sur la phase (Os, Os) d'au moins une cible détectée (24) est déterminé à partir d'au moins une différence de phase de l'au moins un signal d'écho (26) au moyen d'au moins une table de consultation et/ou d'au moins un calcul.

9. Méthode selon l'une des revendications précédentes, **caractérisée en ce que** les vitesses radiales (vr) des cibles détectées correspondantes (24) sont déterminées à partir des décalages Doppler et des quotients des vitesses radiales (vr) et des vitesses de véhicule correspondantes (ví) sont déterminés, plusieurs tuples initiaux (32) chacun avec des quotients et des angles de cible basés sur la phase correspondants (Os, Os) sont déterminés, ces quotients, qui appartiennent à des tuples initiaux (32) avec les mêmes angles de cible basés sur la phase ($\Phi$s, Os), sont moyennés en un quotient moyenné correspondant (vr/VH)AV, les angles de cible basés sur l'effet Doppler correspondants ($\Phi_H$, $\Theta_H$) sont déterminés à partir des quotients moyennés (vr/VH)AV, chacun des angles de cible basés sur l'effet Doppler ($\Phi_H$, $\Theta_H$) avec l'angle de cible basé sur la phase correspondant (Os, Os) sont assignés à un tuple de moyennage (36) la valeur de correction d'angle ($\Delta\Phi$, $\Delta\Theta$) correspondant aux angles de cible basés sur la phase ($\Phi$s, Os) sont déterminées à partir de la différence de l'angle de cible basé sur l'effet Doppler ($\Phi_H$, $\Theta_H$) et de l'angle de cible basé sur la phase (Os, Os) des tuples de moyennage correspondants (36), et les valeurs de correction d'angle ($\Delta\Phi$, $\Delta\Theta$) avec les angles de cible basés sur la phase correspondants (Os, Os) sont stockées dans la table de consultation de correction.

10. Méthode selon l'une des revendications précédentes, **caractérisée en ce qu'**il est testé si l'au moins une cible détectée (24) est stationnaire, et si l'au moins une cible détectée (24) n'est pas stationnaire, les signaux d'écho (26) de l'au moins une cible non stationnaire (24) ne seront pas utilisés pour la détermination de l'au moins une valeur de correction d'angle ($\Delta\Phi$, $\Delta\Theta$).

11. Méthode selon l'une des revendications précédentes, **caractérisée en ce que** l'azimut ($\Phi$) et/ou l'angle d'élévation ($\Theta$) peuvent être déterminés comme au moins un angle de cible correspondant.

12. Méthode selon l'une des revendications précédentes, **caractérisée en ce qu'**au moins une vitesse de véhicule (v) est déterminée par au moins un système de mesure de vitesse (16), en particulier un système de mesure de vitesse (16) du véhicule (10).

13. Méthode selon l'une des revendications précédentes, **caractérisée en ce qu'**au moins deux angles de cible ($\Phi$, $\Theta$), en particulier l'azimut et l'angle d'élévation, sont déterminés chacun, qui caractérisent les directions des cibles (24) par rapport à différentes zones de référence des systèmes de référence (28).

14. Système radar (14) d'un véhicule (10) pour surveiller un environnement du véhicule (10), comprenant au moins une antenne (Tx) pour transmettre des signaux radar (22) dans une zone de surveillance (18), au moins deux antennes (Rx) pour recevoir des signaux d'écho (26) de signaux radar (22) qui sont réfléchis par au moins une cible (24), des moyens pour déterminer des angles de cible basés sur la phase (Os, Os) à partir de différences de phase des signaux d'écho reçus (26), qui peuvent être reçus avec différentes antennes (Rx), où les angles de cible basés sur la phase ($\Phi_S$, Os) caractérisent les directions des cibles détectées (24) par rapport à un système de référence radar (28s) du système radar (14), des moyens pour déterminer des angles de cible basés sur l'effet Doppler ($\Phi_H$, $\Theta_H$) à partir de décalages Doppler des signaux d'écho reçus (26) et des vitesses de véhicule (vi) du véhicule (10), où les angles de cible basés sur l'effet Doppler ($\Phi_H$, $\Theta_H$) caractérisent les directions des cibles détectées (24) par rapport à un système de référence nominal (28) du véhicule (10), des moyens (30) pour déterminer des valeurs de correction d'angle ($\Delta\Phi$, $\Delta\Theta$) en comparant des angles de cible basés sur la phase (Os, Os) et des angles de cible basés sur l'effet Doppler ($\Phi_H$, $\Theta_H$), où le système radar (14) comprend des moyens (30) pour déterminer des valeurs de correction d'angle ($\Delta\Phi$, $\Delta\Theta$) à partir de différences d'angles de cible basés sur la phase (Os, Os) et d'angles de cible basés sur l'effet Doppler ($\Phi_H$, $\Theta_H$) et au moins une table de consultation de correction pour stocker des valeurs de correction d'angle ($\Delta\Phi$, $\Delta\Theta$) avec des angles de cible correspondants, en particulier avec des angles de cible basés sur la phase correspondants (Os, Os), **caractérisé en ce qu'** il comprend en outre des moyens pour déterminer plusieurs tuples initiaux (32) chacun avec un angle de cible basé sur l'effet Doppler ($\Phi_H$, $\Theta_H$) et un angle de cible basé sur la phase correspondant (Os, Os) qui sont basés sur le même signal d'écho (26) sont déterminés, pour moyenner ces angles de cible basés sur l'effet Doppler ($\Phi_H$, $\Theta_H$), qui appartiennent à des tuples initiaux (32) avec les mêmes angles de cible basés sur la phase (Os, Os), en un angle de cible basé sur l'effet Doppler moyenné correspondant, pour assigner chacun des angles de cible basés sur l'effet Doppler moyennés avec l'angle de cible basé sur la phase correspondant (Os, Os) à un tuple de moyennage respectif, pour déterminer les valeurs de correction d'angle ($\Delta\Phi$, $\Delta\Theta$) correspondant aux angles de cible basés sur la phase (Os, Os) à partir de la différence de l'angle de cible basé sur l'effet Doppler moyenné et de l'angle de cible basé sur la phase (Os, Os) des tuples de moyennage correspondants, et pour stocker les valeurs de correction d'angle ($\Delta\Phi$, $\Delta\Theta$) avec les angles de cible basés sur la phase correspondants (Os, Os) dans la table de consultation de correction.

15. Véhicule (10) avec au moins un système radar (14) selon la revendication précédente.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200132812 A1
- US 2015070207 A1
- DE 102011015935 A1
- EP 0989414 A1